(19) Europäisches Patentamt
European Patent Office
Office européen des brevets

(11) EP 2 267 050 A1

(12) EUROPEAN PATENT APPLICATION

(43) Date of publication:
29.12.2010 Bulletin 2010/52

(21) Application number: 09160686.3

(22) Date of filing: 19.05.2009

(51) Int Cl.:
*C08G 18/28* (2006.01) *C08G 18/32* (2006.01)
*C08G 18/67* (2006.01) *C08G 18/76* (2006.01)
*C09D 175/14* (2006.01)

(84) Designated Contracting States:
AT BE BG CH CY CZ DE DK EE ES FI FR GB GR HR HU IE IS IT LI LT LU LV MC MK MT NL NO PL PT RO SE SI SK TR

(71) Applicant: **Cytec Surface Specialties, S.A.**
**1070 Brussels (BE)**

(72) Inventors:
- **WANG, Zhikai (Jeffrey)**
  **Roswell, GA 300075 (US)**
- **HUTCHINS, Marcus Lee**
  **Hiram, GA 30141 (US)**

(74) Representative: **Schoofs, Hilde**
**Cytec Surface Specialties, S.A.**
**Patent Department**
**Anderlechtstraat 33**
**B-1620 Drogenbos (BE)**

(54) **Radiation Curable Compositions**

(57) A composition comprising at least one curable compound (I) having a refractive index $n_D^{20}$ of at least 1.60 and obtained from the reaction of
**A** at least one aromatic polyisocyanate,
**B** at least one monofunctional alcohol or amine,
**C** at least one further monofunctional alcohol or amine different from **B**,
**D** at least one diol or diamine, and
**E** optionally a hydroxyl group containing (meth)acrylate,
the compound (I) comprising at least one curable functional group selected from the group consisting of carbon-carbon double bonds and epoxy groups.

EP 2 267 050 A1

## Description

This invention relates to new curable compositions, especially to new radiation curable compositions which have a high refractive index.
For many optical applications it is desirable for coatings or films to exhibit high refractive index. For example high refractive index coatings are applied to flat panel displays, such as liquid crystal displays (LCD's), as brightness enhancing film. Polarizer films used in LCD's also require hard coatings of high refractive index. It is also desirable that such coatings provide improved protection to the substrate, for example improved resistance e.g. to scratching.
Radiation curable compositions having a high refractive index have been known for several years. Usually these compositions comprise different radiation curable monomers and/or oligomers, some of which based on thiols. A presentation made during Radtech 2007 by I.Khudyakov et al. described thiourethanes with high refractive index obtained from the reaction of thiols such as thiophenol or polysulfides with diisocyanates and 2-hydroxyethylacrylate. Polysulfide thiourethane acrylates have also been described by Quan et al., Journal of Applied Polymer Science, Vol.91, 2358-2363 (2004). Thiols and polysulfides in general have a bad odor and hence may present problems during their use and also during subsequent use of the products obtained from these thiols and polysulfides. Moreover, thiourethanes have in general also a poor stability. Additionally, smooth release from the mold in brightness enhancing film printing and cure process can be an issue for S-containing molecules.
Halogenation is another well-known approach to high refractive index materials. Disadvantage is an often poor compatibility/solubility with other molecules. Moreover, recently, there are globally fast growing demands for halogen-free materials because of increasing environmental concerns.
Many inorganic materials are known to provide an extremely high refractive index. However, they are complex and expensive to coat as they require methods such as vacuum chemical vapor deposition. Inorganic-organic hybrid composite materials have been proposed to obtain new types of materials with the combined advanced properties of both inorganic and organic materials. However, surface-modification of nanoparticles, often results in unusual rheological behaviors and the high cost remains a technical and commercial challenge.
We now have found a new class of (radiation) curable compositions which enable to provide high refractive index films and coatings which do not present the drawbacks of the (radiation) curable compositions described before. The present invention therefore relates to a composition comprising at least one curable compound (I) having a refractive index $n_D^{20}$ of at least 1.60 and obtained from the reaction of

- **A** at least one aromatic polyisocyanate,
- **B** at least one monofunctional alcohol or monofunctional amine,
- **C** at least one further monofunctional alcohol or further monofunctional amine different from **B,**
- **D** at least one diol or diamine, and
- **E** optionally a hydroxyl group containing (meth)acrylate,

the compound (I) comprising at least one curable functional group selected from the group consisting of carbon-carbon double bonds and epoxy groups. Preferably the composition is a radiation curable composition.

In the above at least one of **B, C** and/or **D** bears a curable functional group or, if not, compound **E** has to be present.

The refractive index $n_D^{20}$ of a material is generally defined as being the ratio of the speed of electromagnetic radiation in free space to the speed of the radiation in that material, the radiation being sodium yellow light at a wavelength of about 589.3 nm and the measurement being done at 20 °C.
As used herein 'radiation-curable' denotes a material which will polymerize when irradiated for example with actinic radiation and/or ultraviolet (UV) light (optionally in the presence of another ingredient such as a photo-initiator) and/or ionizing radiation (such as electron-beam). Actinic radiation is electromagnetic radiation capable of producing photochemical action, but of insufficient energy to product ions in a medium of common materials and usually has a wavelength of greater than 185 nanometres. UV light is radiant energy having a wavelength from 180 to 400 nanometres (1.8 to 4.0 x 10-7 meters). Ionizing radiation is particle or electromagnetic energy (such as gamma rays or X-rays); capable of producing ions in common materials, usually energies of greater than about 10 electron volts or 16 x 10-19 joules. Electron beam (e-beam) is a beam of electrons typically displaced from a metallic filament by a high voltage source of acceleration. Preferred methods to achieve radiation polymerization comprise UV light and/or e-beam. The polymerization mechanism can be any suitable method that can be induced by radiation (e.g. free radical, cationic etc). Curing is preferably done by exposing the composition of the invention to electromagnetic radiation such as UV-radiation or electron beams, preferably UV light, generally for about 0.2 seconds to several minutes (e.g. 4 minutes) at a temperature from about 20°C (room temperature) to about 120 °C.

Carbon-carbon double bond containing curable functional groups include (meth)acrylate, (meth)acrylamide, N-vinylamide, vinylester, allylether, allylamine, N-vinylamine, vinylether, maleate, fumarate, maleamide, fumaramide, maleimide, citraconimide and norbornene groups.
Vinylethers are of particular interest. Vinylethers are capable of forming homopolymers and copolymerize with e.g. monomers such as maleates, fumarates and acrylics.
Preferred are vinyl and/or (meth)acryl groups. Most preferred are (meth)acryl groups. In the present invention, the term "(meth)acryl' is to be understood as to encompass both acryl and methacryl compounds or derivatives as well as mixtures thereof. Preferred are $-O-CO-CH=CH_2$ and/or $-O-CO-CCH_3=CH_2$, most preferred is $-O-CO-CH=CH_2$.
The curable functional groups which preferably are (meth)acryloyl groups may be introduced in various ways.
Possibly and preferably compound **D** comprises at least one, preferably at least two or more (meth)acryl groups.
In the same or a different embodiment at least one of the compounds **B** and/or **C** comprise at least one (meth)acryloyl group, possibly two or more (meth)acryl groups.
In the same or a different embodiment at least one of compounds **B** and/or **C** is a hydroxyl group containing (meth) acrylate, preferably a hydroxyl group containing mono(meth)acrylate. Preferably compounds **B** and/or **C** are aromatic hydroxyl group containing (meth)acrylates, advantageously comprising at least one aromatic ring, more preferably comprising multi-aromatic rings (e.g. 2 or more aromatic rings). Particularly preferred is o-phenyl phenol glycidylether acrylate.
In the same or a different embodiment, compound (I) is obtained from the reaction of compounds **A** through **E** (compound **E** being the hydroxyl group containing (meth)acrylate). A preferred compound **E** is a hydroxyl group containing mono (meth)acrylate, more preferred a hydroxyl group containing monoacrylate.
Compound **E** may be added in various ways. It may for instance be admixed to compounds **B** and/or **C,** or may be added in a final step to cap unreacted isocyanate groups.
Compound **E** advantageously is an aliphatic hydroxyl group containing (meth)acrylate. Preferred hydroxyl group-bearing (meth)acrylates **E** are the (meth)acrylic esters with linear and branched polyols in which at least one hydroxy functionality remains free, like hydroxyalkyl(meth)acrylates having 1 to 20 carbon, preferably 1 to 6, atoms in the alkyl group. Preferred molecules in this category are hydroxyethyl (meth)acrylate, hydroxypropyl (meth)acrylate, hydroxybutyl (meth)acrylate. Acrylates are preferred. Most preferred are hydroxypropyl acrylates, in particular 2-hydroxypropyl acrylate.

Provided as such is a curable composition comprising at least one compound (I) having a refractive index $n_D^{20}$ of at least 1.60 and obtained from the reaction of

**A** at least one aromatic polyisocyanate,
**B** at least one monofunctional alcohol or monofunctional amine,
**C** at least one further monofunctional alcohol or monofunctional amine different from **B,** and
**D** at least one diol or diamine,
with the proviso that at least one of the compounds **B, C** and/or **D** comprises at least one (meth)acryloyl group, and/or with the proviso that the compound (I) is obtained from compounds **A** through **D** and a further compound **E** being a hydroxyl group containing (meth)acrylate.

In particular there is provided a curable composition comprising at least one compound (I) having a refractive index $n_D^{20}$ of at least 1.60 and obtained from the reaction of

**A** at least one aromatic polyisocyanate,
**B** at least one monofunctional alcohol or monofunctional amine,
**C** at least one further monofunctional alcohol or monofunctional amine different from **B,** and
**D** at least one diol or diamine, and
**E** a hydroxyl group containing (meth)acrylate;
with optionally at least one of the compounds **B, C** and/or **D** comprising at least one (meth)acryloyl group.

Advantageously the compound (I) is a urethane (meth)acrylate, more preferably a urethane (meth)acrylate oligomer, most preferably a urethane acrylate oligomer.
The urethane (meth)acrylate may be a mono-functional or polyfunctional urethane (meth)acrylate. Preferably the number of (meth)acrylate functions is at least 2. Preferably the number of (meth)acrylate functions however does not exceed 8, more preferably does not exceed 6. Preferably the urethane (meth)acrylate is a di-, tri- or tetra-functional urethane (meth) acrylate, more preferably a tri- or tetra-functional (meth)acrylate with three or four (meth)acryloyl groups. Advantageously compounds (I) of the invention have a number average molecular weight (Mn) of between 1,000 and 20,000. Preferred are those having a Mn of at least 1,000, more preferably at least 1,200. Preferred oligomers have a Mn of at most 10,000, preferably at most 5,000, more preferably at most 3,000 as determined by gel permeation chromatography (GPC, in

THF on a 3xPLgel 5μm Mixed-D LS 300x7.5mm column MW range 162 to 377400 g/mol calibrated with polystyrenes standards, at 40 °C, using a Merck-Hitachi apparatus).

In the present invention, the polyisocyanate **A** is generally an aromatic polyisocyanate or a derivative thereof containing urethane, isocyanurate, allophanate, biuret, uretdione and/or imino-oxadiazinedione groups.

Preferred are polyisocyanates of formula $R^2$-(NCO)n+m wherein n+m is at least 2 and preferably not more than 6 and $R^2$ is chosen from arylene and aralkylene chains which may contain one or more -N-CO-O- and/or

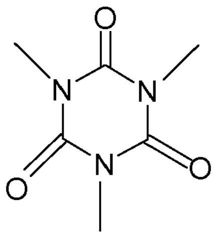

bridges

The term "arylene" as used herein, is defined as including divalent radicals derived from an aromatic hydrocarbon comprising one or more rings by removal of two hydrogen atoms and containing from 5 to 30 carbon atoms.

The term "aralkylene" as used herein, represents a divalent radical comprising a combination of alkylene and arylene moieties. Aralkylene groups having from 6 to 30 carbon atoms are preferred. In the present invention n+m is preferably 2 to 4, more preferably 2 to 3 and most preferably 2. More preferably the polyisocyanate **A** is a di- or tri-isocyanate, most preferably a di-isocyanate, or a di- or tri-mer thereof.

The aromatic polysiocyanate **A** comprises at least 1 aromatic ring, possibly comprises 2 or more aromatic rings. A preferred aromatic ring is a phenyl ring.

Preferably the polyisocyanate **A** is an asymmetric polyisocyanate.

Preferred polyisocyanates **A** are those having a refractive index $n_D^{20}$ of at least 1.50, more preferably at least 1.53, most preferably at least 1.59.

Examples of suitable polyisocyanates are diphenylmethane diisocyanates (such as diphenylmethane-2,4'-diisocyanate and diphenylmethane-4,4'-diisocyanate), toluene diisocyanates (TDI, such as 2,4-toluene-diisocyanate and 2,6-toluene-diisocyanate), meta-tetramethylxylylene diisocyanate (TMXDI® (META)), 1,3-bis-(isocyanatomethyl)benzene, 1,5-naphthylene diisocyanate, their di-, tri- or oligomers and their adducts with polyols,

Examples of adducts of e.g. TMXDI and e.g. TDI include the following: the adduct of toluene diisocyanate and trimethylolpropane (**F**) and the adduct of TMXDI (**G**).

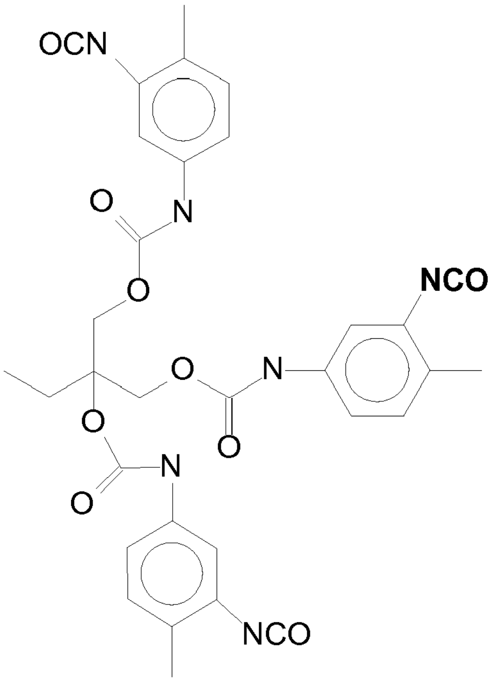

(F)

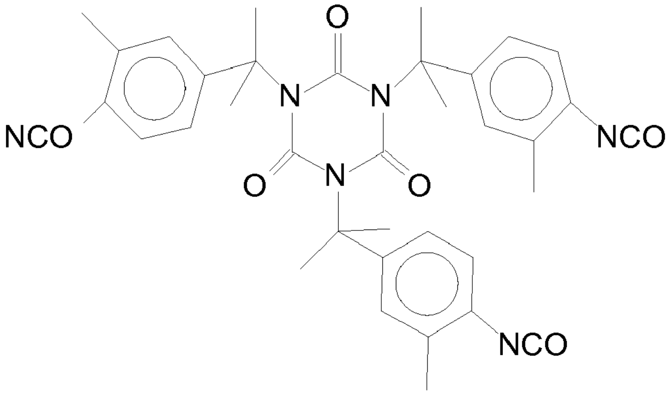

(G)

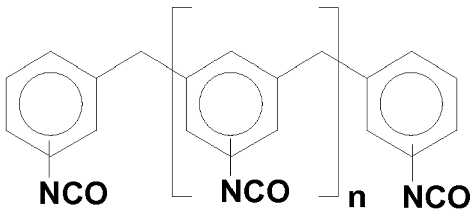

n = 0-4

(H)

Particularly preferred are diphenylmethane-2,4'-diisocyanate and diphenylmethane-4,4'-diisocyanate, more particularly diphenylmethane-2,4'-diisocyanate, and the oligomers thereof such as the MDI oligomer (**H**) described below wherein n is from 0 to 4, more preferably from > 0 to 4. An example of such MDI oligomer (pMDI) is the commercially available polymeric diphenylmethane diisocyanate Mondur® MR L. An isomer mixture of diphenylmethane diisocyanate (MDI) containing a high percentage of the 2,4' isomer is commercialized under the name Mondur® ML.

In the present invention, compounds **B** and **C** are monofunctional alcohols and/or (monofunctional) amines.

Preferred are monofunctional alcohols. The alcohols may be primary, secondary or tertiary alcohols, but preferably are primary or secondary alcohols.
Preferably compounds **B** and/or **C** are aromatic compounds, advantageously comprising at least one aromatic ring, possibly comprising 2 or more aromatic rings.

Preferably compound **B** has a refractive index $n_D^{20}$ of at least 1.48, more preferably at least 1.52, most preferably at least 1.55.

Preferably compound **C** has a refractive index $n_D^{20}$ of at least 1.48, more preferably at least 1.52,, most preferably at least 1.55.
Examples of suitable monofunctional alcohols are benzylalcohol, 2-phenoxyethanol, 3-phenyl 1-propanol, 2-phenylphenoxyethanol (or β-hydroxyethyl ether of o-phenylphenol), 2-naphthol, 4-phenylphenol, o-phenyl phenol glydidylether acrylate, and 1-([1,1'-biphenyl]-4-yloxy)-2-propanol. Preferred are 2-phenoxyethanol, benzylalcohol, o-phenyl phenol glydidylether acrylate, 4-phenylphenol and 3-phenyl 1-propanol. Particularly preferred are 2-phenoxyethanol, benzylalcohol and o-phenyl phenol glydidylether acrylate. Both compounds **B** and **C** may be selected from said same list, with the proviso that compound **B** is different from compound **C.**
In particular the following mixture of monofunctional alcohols may be used: 4-phenylphenol and 3-phenyl 1-propanol; 2-phenoxyethanol and benzylalcohol; 2-phenoxyethanol and o-phenyl phenol glydidylether acrylate. Particularly preferred is the mixture of 2-phenoxyethanol and benzylalcohol. To these alcohols or alcohol mixtures a hydroxyl group containing (meth)acrylate such as hydroxypropyl acrylate may be added.

In the present invention, compound **D** is a diol or diamine (also referred to as a difunctional alcohol or a difunctional amine). Preferred are diols. The diol may be primary, secondary or tertiary diol, but preferably is primary or secondary diol.
Preferably compound **D** is an aromatic compound, advantageously comprising at least one aromatic ring, possibly comprising 2 or more aromatic rings. A preferred aromatic ring is a phenyl ring. Preferably compound **D** has a refractive index $n_D^{20}$ of at least 1.50, more preferably at least 1.53, most preferably at least 1.55.

Examples of suitable diols are resorcinol (1,3-benzenediol), 2[4-[4-(2-hydroxyethoxy)phenyl]phenoxy]ethanol and bisphenol-A epoxy diacrylates, such as the one commercialized under the name Ebecryl® 3700. Particularly suited are Ebecryl® 3700 and resorcinol. Most preferred is Ebecryl® 3700.
Advantageously each compound **D** reacts with 2 polyisocyanate molecules **A,** resulting in a polyisocyanate-diol-polyisocyanate backbone. Depending on the equivalent ratio between compound **D** and compound **A,** an extended backbone with k repeat units: polyisocyanate-(diol-polyisocyanate)$_k$-may be formed. Herein k may have any value from 1 to 9. Preferably k is from 1 to 6, more preferably from 1 to 4, advantageously from 2 to 4. Preferably k = 1, 2 or 3. Most preferably k =2 or 3.

Advantageously compound (I) is an asymmetric molecule. Advantageously the compound (I) is substantially free from halogen and sulphur. By "substantially free from" is meant that the content of halogen and sulphur in said compound is less than 2.0 % by weight, preferably less than 1.0% by, more preferably less than 0.2 % by weight.
Advantageously a liquid compound is obtained.

In general, the ratio of $Eq._B/Eq._A$ , or respectively $Eq._C/Eq._A$ is in the range of 0.05 - 0.60, preferably in the range of 0.10 - 0.50, more preferably in the range of 0.15 - 0.400, most preferably in the range of 0.20 - 0.35.
The ratio of $Eq._B/Eq._A$ and the ratio of $Eq._C/Eq._A$ do not have to equal each other although sometimes they are equal to each other. Preferably, they are not equal to each other. More preferably, the ratio of the monofunctional compound with the higher RI is higher (compared to the one with the lower RI).
The sum of the ratio of $Eq._B/Eq._A$ and the ratio of $Eq._C/Eq._A$ advantageously is in the range of 0.10 - 0.80, preferably in the range of 0.20 - 0.70, more preferably in the range of 0.30 - 0.60, and most preferably in the range of 0.30 - 0.50.
The ratio of $Eq._D/Eq._A$ is in the range of 0.100 - 0.900, preferably in the range of 0.20 - 0.80, more preferably in the range of 0.25 - 0.70, and most preferably in the range of 0.40 - 0.60.
Herein, $Eq._A$ represents the equivalent number of compound **A;** $Eq._B$ and $Eq._C$ represent the equivalent number of compounds **B** and **C,** respectively; and $Eq._D$: represents the equivalent number of compound **D.**
By equivalent is meant to designate in the present invention the number of equivalents of isocyanate reactive groups -OH (or -NH) provided by compounds **B, C** and **D,** respectively, per equivalent of isocyanate groups provided by the polyisocyanate **A.**
Advantageously the ratio of $Eq._B/Eq._C$ is in the range of 10 to 1, more preferably in the range of 8 to 1, most preferably in the range of 3 to 2, with compound **B** having a refractive index that is higher than that of compound **C.**
When present, the amount of compound **E** is in the range of 10% to 60%, by weight and based on the total amount of compounds **A** through **E.** Preferably this amount is at least 20%, more preferably at least 25%. Preferably this amount

is at most 50%, more preferably at most 35%.
In the present invention advantageously at least one of compounds **B, C** and **D** bears at least one curable functional group, or if not, compound **E** must be present.

Advantageously compounds (I) of the invention are highly aromatic molecules with a refractive index higher than 1.59, in particular higher than 1.60, preferably higher than 1.61, most preferably higher than 1.62. Advantageously this compound (I) has a polyisocyanate-(diol-polyisocyanate)$q_k$-backbone with the monofunctional compounds **(B** and C), possibly hydroxyl group containing (meth)acrylates, reacting with the remaining -NCO groups of the polyisocyanate. By "remaining" is meant those that have not reacted with the difunctional compound **D.** Herein q may have any value from 1 to 9. Preferably q is from 1 to 6, more preferably from 1 to 4, advantageously from 2 to 4. Preferably q = 1, 2 or 3. Most preferably q =2 or 3.

The present invention also relates to a process for the preparation of a (any) composition as described here above, and to a product (or composition) obtainable by such method. The composition according to the invention can be prepared by any method suitable therefore.
In a process according to the invention, the reaction is preferably conducted in at least 2 steps, wherein in a first step the polyisocyanate **A** is reacted with the monofunctional compounds **B** and **C,** and in a second step the reaction product thus obtained is further reacted with the difunctional compound **D.**
Alternatively, in a first step the polyisocyanate **A** is reacted with the difunctional compound **D,** and in a second step the reaction product obtained is further reacted with the monofunctional compounds **B** and **C.**
The monofunctional compounds (**B** and **C**) may be added one by one but preferably are added simultaneously under the form of a premix. In said premix the monofunctional compounds are intimately mixed to obtain a homogeneous state. Said premix may comprise further compounds such as a reactive diluent and/or a hydroxyl group containing (meth) acrylate (for introducing acrylate functions).
The reaction is generally performed in the present of a catalyst, such as for example amine and orgametallic complex catalysts. Dibutyl tin dilaurate catalyst is particularly suitable.
The reaction is preferably performed at a temperature of from 20 to 120 °C, more preferably from 50 to 100 °C.
The reaction is preferably performed in the presence of a polymerization inhibitor or stabilizer or any combination thereof. Primary anti-oxidants (free-radical inhibitors) such as quinones, in particular hydroquinone, and di-tert butyl p-cresol are particularly preferred.
The reaction can be performed in the presence of a solvent or diluent, preferably a reactive solvent or diluent. By reactive solvent or diluent is meant to designate a compound which is curable as described infra, but which does not react with any of the compounds **A** through **E.** According to a preferred embodiment, at least reactive diluent is added to the composition, during, at the end of and/or after its synthesis.

Preferred compounds (I) are prepared from 2-phenoxyethanol and benzylalcohol as monofunctional compounds **(B** and **C),** from a bisphenol-A epoxy diacrylate (Ebecryl® 3700) as difunctional compound **D,** from diphenylmethane diisocyanate or a polymeric form thereof (Mondur® ML or Mondur® MR L) as compound **A,** and optionally from hydroxypropyl acrylate as optional compound **E.**

The composition according to the invention generally contains at least 5 %, preferably at least 15 %, more preferably at least 25 %, by weight of compound (I). The amount of compound (I) usually does not exceed 95 % by weight, preferably 80 % by weight of the composition.
The composition according to the invention preferably contains, besides the one or more compounds (I), at least curable reactive diluent. This diluent is preferably a copolymerizable ethylenically unsaturated compound, more preferably a mono- or polyfunctional (meth)acrylate compound. By copolymerizable ethylenically unsaturated compound is meant to designate monomers and oligomers that are copolymerisable with the compound of formula (I), generally under photopolymerisation conditions, especially by irradiation. Preferred copolymerizable ethylenically unsaturated compounds are mono- and multifunctional (meth)acrylates that have a refractive index $n_D^{20}$ of at least 1.45, more preferably at least 1.50, most preferably at least 1.55. Preferred copolymerizable ethylenically unsaturated compounds are those having a viscosity of at most 200 cP.s at 25 °C.
Examples of suitable monomers and oligomers include (meth)acrylic acid, beta-carboxyethyl acrylate, butyl(meth)acrylate, methyl(meth)acrylate, isobutyl (meth)acrylate, 2-ethylhexyl(meth)acrylate, cyclohexyl (meth)acrylate, trimethyl cyclohexyl (meth)acrylate, n-hexyl (meth)acrylate, isobornyl (meth)acrylate, isooctyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, phenoxy phenol ethyl acrylate, 2-(-2-ethoxyethoxy)ethyl(meth)acrylate, 2-butoxyethyl (meth)acrylate, benzyl (meth)acrylate, bromobenzyl (meth)acrylate, dibromobenzyl (meth)acrylate, tribromobenzyl (meth)acrylate, pentabromobenzyl (meth)acrylate, cardura (meth)acrylate, 1,6-hexanediol di(meth)acrylate, pentaerythritoltri(meth)acrylate, trimethylolpropanetri(meth)acrylate, phenylglycidylether(meth)acrylate, bisphenol diglycidylether(meth)acrylate and (meth)acrylated oxyethylated or/and oxypropylated derivatives thereof, urethane (meth)acrylates, epoxy (meth) acrylates and polyester (meth)acrylates.

Preferred (meth)acrylated compounds are those comprising at least one group selected from aromatic and cyclohexyl. Preferably also the reactive diluent is free from halogen and sulphur groups.
Preferred (meth)acrylated compounds comprising at least one aromatic group are phenyl (meth)acrylates, especially 2-phenoxyethyl acrylate, and (meth)acrylated bisphenol-A and bisphenol-F derivatives, especially their oxyethylated and/or oxypropylated derivatives. Especially preferred are bisphenol-A oxyethylated diacrylates, such as those commercialized under the name of EBECRYL®150, and 2-phenoxyethyl acrylate, commercialized under the name of EBECRYL®114.
The amount of reactive diluent present in the composition is generally from 0 to 80 %, preferably from 0 to 50 %, more preferably from 0 to 30 %, by weight.
The composition used in the process according to the invention usually also contains at least one inhibitor. Inhibitors include without limitation hydroquinone, toluhydroquinone, monomethyl ether hydroquinone, tert-butyl hydroquinone, di-tert-butyl hydroquinone, phenothiazine. The amount of inhibitor used is preferably from 0 to 0.5 % by weight.
The composition may also comprise at least one photochemical initiator and/or chemical initiator, capable of initiating the polymerization of the curable compound and optionally the other curable compounds present therein. Photochemical initiators (also called photoinitiators) are compounds that can generate radicals by absorption of light, typically UV light. The photoinitiators are preferably free-radical photoinitiators.
When cured under UV-light, curable compositions comprising at least one photoinitiator are preferred. The amount of photoinitiator or chemical initiator in the composition is preferably comprised between 0.01 and 5 wt%.
Alternatively, the composition can be cured in the absence of an initiator, especially by electron beam radiation.
The curable composition according to the invention may also comprise other additives such as dispersing agents, surfactants, wetting agents, emulsifying agents, antioxidants, flow modification agents, slip agents, fire retardant agents, UV-protection agents. The total amount of additives preferably does not exceed 10 % by weight.
The compositions according to the invention are preferably substantially free of water and organic solvents which are considered as being volatile organic solvents (VOC's). Hence, the compositions are generally considered as 100 % curable composition, which do not need evaporation of water or solvent during subsequent curing. The compositions according to the invention are further advantageously halogen-free and sulfur free. Advantageously compositions of the invention are liquid at room temperature.

The (radiation) curable composition according to the invention generally presents a high refractive index. In general, the (radiation) curable composition according to the invention presents a refractive index $n_D^{20}$ of at least 1.50, preferably at least 1.53, more preferably at least 1.55.
The (radiation) curable compositions according to the invention generally have a viscosity, measured at 25 °C according to ASTM method D-2196-05, of at most 100,000 cP.s, preferably of at most 10,000. cP.s, more preferably of at most 1,000 cPs, and most preferably of at most about 200 cP.s.
The radiation curable composition according to the invention permits to obtain films and coatings presenting a high refractive index as well as good mechanical properties. The compositions according to the invention permit to obtain films and coatings which present high tensile strength elongation, modulus and toughness. The compositions according to the invention permit to obtain films and coatings which present high scratch resistance.
The compositions according to the invention permit to obtain clear films and coatings which have good transparency.
The radiation curable compositions according to the invention are therefore suitable to prepare films and coatings used in flat panel displays such as LCD's and as brightness enhancing films.
The present invention therefore further relates to a method for making films and coatings, especially for use in flat panel displays and brightness enhancing films, wherein a composition according to the invention is used, as well as the coatings and films obtained with a composition according to the invention. The composition according to the invention can be charged to a mold that may bear a microstructure to be replicated or applied to the surface of a substrate and then polymerized by exposure to radiation or to heat in order to produce a cured coating or film. Radiation is generally done by UV-light or by electron bean.
The coatings and films prepared using a composition according to the invention generally present a high refractive index. In general, the coatings and films present a refractive index of at least 1.50, preferably at least 1.55, more preferably at least 1.60. The refractive index of the cured coatings or film was determined at 20 °C using ruby red laser at 632.8 nm (Metrocon Prism Coupler, Model # 2010).

The following examples are submitted for a better understanding of the invention without being restricted thereto.

**Acronyms of chemicals used in the Examples:**

MDI MRL: Mondur® MR Light (a polymeric diphenylmethane diisocyanate, pMDI); MDI ML: Mondur® ML (mixture of diphenylmethane-2,4'-diisocyanate and diphenylmethane-4,4'-diisocyanate); BHT: butylated hydroxytoluene; DBTDL: dibutyl tin dilaurate; HQ: hydroquinone; BZ-OH: Benzyl Alcohol; POEOH: 2-phenoxyethanol; EB3700: Ebecryl® 3700 (bisphenol-A-epoxy diacrylate); PPEA: o-phenylphenoxyethylacrylate

**Example 1 :**

Preparation of Premix I: 54.07g of BZ-OH, 69.09g of POEOH, and 207.59g of PPEA are mixed to a homogeneous state.

252.50g of MDI ML, 0.85g of DBTDL, 0.56g of BHT, and 0.11g of HQ were placed into a reactor and agitated at room temperature. The Premix I was added thereto over a period of about 0.5 hour while maintaining the temperature at about 93°C. Thereafter, the reaction mixture is heated if needed, and maintained for about 1 hour at this temperature.

Next 242.28g of EB3700 was slowly added over a period of about 0.5 hour while maintaining the temperature between 93°C and 98°C. Thereafter, the reaction mixture was held for about 1 hour at about 93°C. The reaction mixture was held at this temperature until the NCO content was < 0.2% (hourly sampling). 0.17g of HQ and 0.28g of BHT were then added to the reaction mixture. The batch - maintained at about 93°C - was mixed for a further 30 minutes and then poured up.

A liquid di-acrylate urethane (or a difunctional urethane acrylate oligomer) was obtained that is halogen-free and sulfur-free with a $n_D^{20}$ of 1.5986 (1.6082 neat) and a viscosity of 117,000 cPs at 60°C. Mw/Mn was 4,070/2,740. Herein $n_D^{20}$ neat stands for the Refractive Index of the compound (I) itself whereas the value 1.5986 stands for the Refractive Index of the final composition (monomer dilution of 30%).

**Example 2 :**

First two Premixes were prepared. For Premix I: 97.33g of BZ-OH and 124.35 of POEOH are mixed to a homogeneous state. For Premix II: 242.28g of EB3700 and 558.28g of PPEA are mixed to a homogeneous state.

372.12g of MDI MRL, 0.74g of DBTDL and 0.50g of BHT were placed into a reactor and agitated at room temperature. The Premix I was added thereto over a period of about 1hour while maintaining the temperature at about 93°C. Thereafter, the reaction mixture is maintained for about 1 hour at this temperature.

Next 0.10g of HQ was added whereafter the Premix II is slowly added over a period or about 0.5 hour while maintaining the temperature between 93°C and 98°C. Thereafter, the reaction mixture was held for about 1 hour at about 93°C.

The reaction mixture was held at this temperature until the NCO content was < 0.2% (hourly sampling). 0.28g of HQ and 0.25g of BHT were then added to the reaction mixture. The batch - maintained at about 93°C - was mixed for a further 30 minutes and then poured up.

A liquid tri-acrylate urethane was obtained that is halogen-free and sulfur-free with a $n_D^{20}$ of 1.5952 (1.6080 neat) and a viscosity of 83,800 cPs at 60°C. Mw/Mn was 28,000/5,480. Herein $n_D^{20}$ neat stands for the Refractive Index of the compound (I) itself whereas the value 1.5952 stands for the Refractive Index of the final composition (monomer dilution of 40%).

**Example 3 :**

First two Premixes were prepared. For Premix I: 290.73g of EB3700 and 645.95g of PPEA are mixed to a homogeneous state. For Premix II: 43.26g of BZ-OH and 55.27g of POEOH are mixed to a homogeneous state.

252.50g of MDI ML, 0.90g of DBTDL, 0.60g of BHT, and 0.12g of HQ were placed into a reactor and agitated at room temperature. The Premix I was added thereto over a period of about 0.5 hour while maintaining the temperature at about 93°C. Thereafter, the reaction mixture is heated if needed, and maintained for about 1 hour at this temperature.

Next, Premix II was added slowly to the reaction mixture over a period of about 0.5hour while maintaining the temperature between 93°C and 98°C. Thereafter, the reaction mixture was held for about 1 hour at about 93°C. The reaction mixture was held at this temperature until the NCO content was < 0.2% (hourly sampling). 0.17g of HQ and 0.28g of BHT were then added to the reaction mixture. The batch - maintained at about 93°C - was mixed for a further 30 minutes and then poured up.

A liquid tetra-acrylate urethane was obtained that is halogen-free and sulfur-free with a $n_D^{20}$ of 1.5902 (1.6044 neat) and a viscosity of 8,000 cPs at 60°C. Mw/Mn was 6,250/3,510. Herein $n_D^{20}$ neat stands for the Refractive Index of the compound (I) itself whereas the value 1.5902 stands for the Refractive Index of the final composition (monomer dilution of 50%).

**Example 4:**

First two Premixes were prepared. For Premix I: 242.28g of EB3700 and 621.94g of PPEA are mixed to a homogeneous state. For Premix II: 54.07g of BZ-OH and 69.09g of POEOH are mixed to a homogeneous state. 252.50g of MDI ML, 0.85g of DBTDL, 0.56g of BHT, and 0.11g of HQ were placed into a reactor and agitated at room temperature. The Premix I was added thereto over a period of about 0.5 hour while maintaining the temperature at about 93°C. Thereafter, the reaction mixture is heated if needed, and maintained for about 1 hour at this temperature. Next, Premix II was added slowly to the reaction mixture over a period of about 0.5hour while maintaining the temperature between 93°C and 98°C. Thereafter, the reaction mixture was held for about 1hour at about 93°C. Thereafter, the reaction mixture was held for about 1hour at about 93°C. The reaction mixture was held at this temperature until the NCO content was < 0.2% (hourly sampling). 0.28g of HQ and 0.25g of BHT were then added to the reaction mixture. The batch - maintained at about 93°C - was mixed for a further 30 minutes and then poured up.

A liquid tetra-acrylate urethane was obtained that is halogen-free and sulfur-free with a $n_D^{20}$ of 1.5905 (1.6050 neat) and a viscosity of 4,260 cPs at 60°C. Herein $n_D^{20}$ neat stands for the Refractive Index of the compound (I) itself whereas the value 1.5905 stands for the Refractive Index of the final composition (monomer diluted).

**Example 5 :**

The compound of Example 4 was hot-boxed (via steam heating) for 4 hours at 60 °C to improve ease of handling. Subsequently this compound was charged to a jar and the additional ingredients listed in Table 1 added. The different formulations were thoroughly mixed until homogenous. After mixing, the formulations were placed in a 60 °C oven for one hour to allow air incorporated during mixing to escape. Prior to mixing, four percent by total weight of Additol BCPK (liquid radical photoinitiator blend of Additol CPK and Additol BP, 50/50) was added to each formulation.

**Table 1**

| | 1 | 2 | 3 | 4 | 5 | 6 | 7 |
|---|---|---|---|---|---|---|---|
| Compound of Example 4 | 70 | 40 | 30 | 60 | 80 | 40 | 30 |
| Phenoxy Phenol Ethyl Acrylate | 30 | 53 | 70 | 40 | 20 | 55 | 62 |
| Ebecryl® 150 | | 7 | | | | | |
| Peta K | | | | | | 5 | |
| Ebecryl® 220 | | | | | | | 8 |
| Liquid RI at 20 °C, $n_D$ | 1.5881 | 1.5812 | 1.582 | 1.5867 | 1.5899 | 1.5784 | 1.5708 |
| Cured Film RI | 1.6053 | 1.6023 | 1.6050 | 1.6081 | 1.6053 | 1.6119 | 1.6115 |
| Viscosity at 25 °C, cP | 23,400 | 1,470 | 6,920 | 8,250 | 53,300 | 1,730 | 1,250 |
| Pencil Hardness | 3H | 3H | 3H | 4H | 5H | 3H | 5H |

Ebecryl® 150 is an ethoxylated bisphenol A diacrylate commonly used as diluent
Ebecryl® 220 is a hexafunctional aromatic urethane acrylate with acrylated polyol as diluent
Peta-K is a mixture of predominantly tri and tetra-acrylate esters of pentaerythritol.

The Liquid Refractive Index was determined using a Lecia mark II Plus Abbe Refractometer and operated according the procedure outline in the Leica Mark II Plus user model.
Viscosity at 25 °C was measured on an Anton Paar Physica MCR 101 employing a CP16-1 cone. Pencil Hardness was determined according to the ASTM D3363 standard. The pencil leads were calibrated pencil leads meeting the following hardness scale:

Soft: 6B-5B-4B-3B-2B-1B-HB-F-H-2H-3H-4H-5H-6H: Hard

Each formulation was cured under two 600 watt/in lamps at 100% power equipped with Mercury doped bulbs. Each coating was exposed to an energy density of 838 $mJ/cm^2$ determined using an International Light Technologies ILT 390C Belt Radiometer.

Observations:

UV-curable reactivity of the compounds of Example 4 is relatively high compared to that of normal high refractive index resins. To achieve a tack free surface, the formulation based on example 4 required only 838 $mJ/cm^2$ whereas normal high refractive index resins required a minimum of 2-3 times energy density to achieve a tack free surface.

Surface hardness also improved significantly compared to normal high refractive index resins. Pencil hardness of the latter ranged between HB and H whereas for compounds of the invention pencil hardness ranged between 3H and 5H. To achieve a higher hardness, di- or higher functional oligomers (di- or higher acrylate functionality) were added to the formulation.

## Claims

1. A composition comprising at least one curable compound (I) having a refractive index $n_D^{20}$ of at least 1.60 and obtained from the reaction of **A** at least one aromatic polyisocyanate, **B** at least one monofunctional alcohol or amine, **C** at least one further monofunctional alcohol or amine different from **B, D** at least one diol or diamine, and **E** optionally a hydroxyl group containing (meth)acrylate, the compound (I) comprising at least one curable functional group selected from the group consisting of carbon-carbon double bonds and epoxy groups.

2. The coating composition of claim 1 wherein the compound (I) is a urethane (meth)acrylate.

3. The coating composition of claim 2 wherein the urethane (meth)acrylate comprises at least 2 (meth)acrylate functions.

4. The coating composition of claim 2 wherein at least one of the compounds **B, C** and/or **D** comprises at least one (meth)acryloyl group and/or wherein the (meth)acryloyl group is provided by compound E.

5. The composition of claim 1 wherein compounds **B** and **C** are aromatic monofunctional alcohols and wherein compound **D** is an aromatic diol.

6. The composition of claim 1 wherein compound **D** comprises at least one (meth)acryloyl group.

7. The coating composition of claim 1 wherein the compound (I) is an asymmetric molecule.

8. The coating composition of claim 1 wherein the compound (I) is substantially free from sulphur and halogen.

9. The coating composition of claim 1 wherein the ratio of $Eq._B/Eq._A$ and of respectively $Eq._{\mathbf{C}}/Eq._{\mathbf{A}}$ is between 0.05 and 0.60, wherein $Eq._{\mathbf{A}}$ represents the equivalent number of compound **A** and $Eq._{\mathbf{B}}$ or $Eq._{\mathbf{C}}$ represents the equivalent number of compounds **B** or **C** respectively.

10. The coating composition of claim 1 wherein the ratio of $Eq._{\mathbf{D}}/Eq._{\mathbf{A}}$ is between 0.1 and 0.9, wherein $Eq._{\mathbf{A}}$ represents the equivalent number of compound **A** and wherein $Eq._{\mathbf{D}}$ represents the equivalent number of compound **D.**

11. The coating composition of claim 9 wherein the sum of the ratios of $Eq._B/Eq._A$ and $Eq._C/Eq._A$ is between 0.10 and 0.80.

12. A process for the preparation of a composition of claim 1 wherein
in a first step compounds **B** and **C** are reacted with compound **A,** and wherein in a second step the reaction product thus obtained is further reacted with compound **D,** or wherein
in a first step compound **D** is reacted with compound **A,** and wherein in a second step the reaction product thus obtained is further reacted with compounds **B** and **C.**

13. A method for making films and coatings wherein a composition of claim 1 is used.

14. Coatings and films obtained with a composition of claim 1.

Europäisches Patentamt
European Patent Office
Office européen des brevets

# EUROPEAN SEARCH REPORT

Application Number
EP 09 16 0686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2009/065743 A (CYTEC SURFACE SPECIALTIES SA [BE]; WANG ZHIKAI JEFFREY [US]; MILLER CH) 28 May 2009 (2009-05-28)<br>* examples 4,9 *<br>----- | 1-14 | INV.<br>C08G18/28<br>C08G18/32<br>C08G18/67<br>C08G18/76<br>C09D175/14 |
| X | US 5 907 023 A (CHAWLA CHANDER P [US]) 25 May 1999 (1999-05-25)<br>* column 1, line 41 *<br>* column 1, line 16 *<br>* column 7, line 29 - line 30 *<br>* example 1 *<br>----- | 1-14 | |
| X | WO 2006/049488 A (DSM IP ASSETS BV [NL]; JSR CORP [JP]; YAMAGUCHI HIROSHI [JP]; KAMO SAT) 11 May 2006 (2006-05-11)<br>synthesis example 1<br>----- | 1-14 | |

TECHNICAL FIELDS SEARCHED (IPC)

C08G
C09D

The present search report has been drawn up for all claims

1

| Place of search | Date of completion of the search | Examiner |
|---|---|---|
| Munich | 20 October 2009 | Müller, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 16 0686

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2009

| Patent document cited in search report | Publication date | Patent family member(s) | Publication date |
|---|---|---|---|
| WO 2009065743 A | 28-05-2009 | NONE | |
| US 5907023 A | 25-05-1999 | AU 691356 B2 | 14-05-1998 |
| | | AU 3883195 A | 19-06-1996 |
| | | CA 2206120 A1 | 06-06-1996 |
| | | DE 69507335 D1 | 25-02-1999 |
| | | DE 69507335 T2 | 09-09-1999 |
| | | EP 0794971 A1 | 17-09-1997 |
| | | JP 10510237 T | 06-10-1998 |
| | | WO 9617000 A1 | 06-06-1996 |
| WO 2006049488 A | 11-05-2006 | EP 1809681 A1 | 25-07-2007 |
| | | EP 2009038 A1 | 31-12-2008 |
| | | JP 2006119559 A | 11-05-2006 |
| | | KR 20070093047 A | 17-09-2007 |
| | | US 2008125546 A1 | 29-05-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **Quan et al.** *Journal of Applied Polymer Science,* 2004, vol. 91, 2358-2363